# EUROPÄISCHE PATENTANMELDUNG

(11) **EP 2 863 010 A1**
(43) Veröffentlichungstag der Anmeldung: **22.04.2015**
(21) Anmeldenummer: 13189518.7
(22) Anmeldetag: 21.10.2013
(51) Int. Cl.: F01D 5/14, F01D 5/18

(54) **Turbinenschaufel**

(71) Anmelder: Siemens Aktiengesellschaft, 80333 München (DE)
(72) Erfinder: Ahmad, Fathi, 41564 Kaarst (DE); Menke, Christian, 45329 Essen (DE); Radulovic, Radan, 44799 Bochum (DE)

(57) **Zusammenfassung**

Eine Turbinenschaufel (120, 130) für eine Gasturbine (100) mit einem Befestigungsbereich (160) und einem sich daran anschließenden Plattformbereich (158), der eine Plattform (162) umfasst, an der ein im Querschnitt profiliertes Schaufelblatt mit einer Druckseitenwand (148) und einer Saugseitenwand (150) angeordnet ist, wobei die Außenseiten der Druckseitenwand (148) und/oder der Saugseitenwand (160) jeweils über eine äußere Verrundung (166) in die Plattformoberfläche übergehen, mit zumindest einem im Schaufelblatt angeordneten, sich bis in den Plattformbereich (158) erstreckenden Hohlraum, in dem zumindest eine die Druckseitenwand (148) mit der Saugseitenwand (150) verbindende Rippe (154) vorgesehen ist, welche sich entlang einer Längsrichtung des Schaufelblatts erstreckend den Hohlraum unterteilt, soll vermittels technisch einfacher Maßnahmen eine höhere Lebensdauer aufweisen. Dazu ist in die Rippe (154) im Plattformbereich (158) zumindest ein die Rippe (154) durchdringender, in der Längsrichtung angeordneter Schlitz (168) eingebracht.

## Beschreibung

Die Erfindung betrifft eine Turbinenschaufel für eine Gasturbine mit einem Befestigungsbereich und einem sich daran anschließenden Plattformbereich, der eine Plattform umfasst, an der ein im Querschnitt profiliertes Schaufelblatt mit einer Druckseitenwand und einer Saugseitenwand angeordnet ist, wobei die Außenseiten der Druckseitenwand und/oder der Saugseitenwand jeweils über eine äußere Verrundung in die Plattformoberfläche übergehen, mit zumindest einem im Schaufelblatt angeordneten, sich bis in den Plattformbereich erstreckenden Hohlraum, in dem zumindest eine die Druckseitenwand mit der Saugseitenwand verbindende Rippe vorgesehen ist, welche sich entlang einer Längsrichtung des Schaufelblatts erstreckend den Hohlraum unterteilt.

Turbinenschaufeln der oben genannten Art dienen in Gasturbinen zur Umwandlung der Energie eines heißen Gasstroms in rotatorische Energie. Sie weisen typischerweise ein von Hohlräumen zur Führung von Kühlluft durchzogenes Schaufelblatt auf, wobei die Hohlräume sich kanalartig entlang der Längsrichtung, d. h. von der Plattform bis zur Schaufelspitze erstrecken und durch Rippen voneinander getrennt sind. Die Rippen erstrecken sich somit von der Druckseitenwand zur Saugseitenwand.

Gegossene Turbinenschaufeln weisen dabei häufig einen Übergangsbereich zwischen Schaufelblatt und Plattformoberfläche auf, welcher durch eine hohlkehlartige Verrundung die Druckseitenwand und die Schaufelseitenwand in diesem Bereich verdickt. Im Übergangsbereich ist somit eine Materialanhäufung vorhanden, welche auch einen Steifigkeitssprung des Schaufelblatts mit sich bringt. Das Schaufelblatt ist somit im Bereich der Plattform steifer als in Bereichen in Richtung der Schaufelspitze. Damit verursachen aber die insbesondere durch die Rippen eingebrachten Temperaturgradienten im Bereich der Plattform hohe Wärmespannungen, die die Lebensdauer der Turbinenschaufel begrenzen und den Wartungsaufwand erhöhen.

Lösungsansätze hierfür bestanden bislang darin, die wärmeisolierende Beschichtung im Bereich der Plattform zu verstärken, was jedoch den technischen Aufwand für die Herstellung und damit die Kosten erhöht. Alternativ wurde vorgeschlagen, die Unterteilung des Hohlraums durch die Rippen sich nicht bis in den Plattformbereich erstrecken zu lassen, oder aber in diesem Bereich großräumige Öffnungen in den Rippen vorzusehen, wie dies z. B. in der WO 2009/106462 A1 vorgesehen ist. Dies verlagert jedoch das Problem nur in andere Bereiche bzw. verschlechtert die Führung der Kühlluft innerhalb der Schaufel.

Es ist daher Aufgabe der Erfindung, eine Turbinenschaufel der eingangs genannten Art anzugeben, die vermittels technisch einfacher Maßnahmen eine höhere Lebensdauer aufweist.

Diese Aufgabe wird erfindungsgemäß gelöst, indem in die Rippe im Plattformbereich zumindest ein die Rippe durchdringender, in der Längsrichtung angeordneter Schlitz eingebracht ist.

Die Erfindung geht dabei von der Überlegung aus, dass für eine gute Führung der Kühlluft keine großräumigen Unterbrechungen oder Verkürzungen der Rippen im Plattformbereich der Turbinenschaufel vorgesehen sein sollten. Dennoch sollte die Steifigkeit in diesem Bereich reduziert werden und die hier auftretenden thermalen Gradienten entkoppelt werden. Dies ist möglich, indem in die Rippe ein Schlitz eingebracht wird, der senkrecht zum thermalen Gradient, d. h. im Wesentlichen parallel zu Druckseitenwand und Saugseitenwand verläuft. Der Schlitz erlaubt eine unterschiedliche thermische Ausdehnung und entkoppelt einzelne Bereiche mit unterschiedlicher thermischer Belastung.

In vorteilhafter Ausgestaltung sind in die Rippe im Plattformbereich mehrere parallele, die Rippe durchdringende, in der Längsrichtung angeordnete Schlitze eingebracht. Hierdurch wird die Steifigkeit noch weiter verringert und die thermische Entkopplung weiter verstärkt. Zudem erlaubt dies eine verbesserte Anpassung der Schlitzgeometrie an die tatsächlich auftretenden Zugbelastungen.

Eine weitere Anpassung an die im Betrieb der Gasturbine auftretenden Zugbelastungen ergibt sich, indem die Länge der Schlitze vorteilhafterweise ausgehend vom Mittelpunkt zwischen Druckseitenwand und Saugseitenwand abnimmt. Hierdurch ergibt sich eine stärkere Reduzierung der Steifigkeit im Zentrum der Turbinenschaufel.

In zusätzlicher oder alternativer vorteilhafter Ausgestaltung ist an einem längsseitigen Ende des jeweiligen Schlitzes ein die Rippe durchdringender Querschlitz angeordnet. Ein derartiger Querschlitz, der zusammen mit dem Hauptschlitz die Form eines T bildet, kann bei bestimmten Schaufelgeometrien hinsichtlich der thermischen Entkopplung ebenfalls von Vorteil sein. Durch eine derartige Anordnung kann unter Umständen auch auf die Einbringung mehrere paralleler Schlitze verzichtet werden.

In vorteilhafter Ausgestaltung durchdringt der jeweilige Schlitz die dem Befestigungsbereich zugewandte Endkante der Rippe, d. h. die Schlitze sind ausgehend von der Endkante eingebracht. Dadurch ergibt sich eine kammartige Unterbrechung der Endkante, was die gewünschte Reduzierung der Steifigkeit erzeugt.

Die Endkante ist dabei vorteilhafterweise zwischen Plattformbereich und Befestigungsbereich angeordnet. Damit ist im Plattformbereich noch eine vergleichsweise gute Unterteilung der einzelnen Kühlluftkanäle möglich.

Ein Stator oder Rotor für eine Turbine umfasst vorteilhafterweise eine derartige Turbinenschaufel als Leit- bzw. Laufschaufel.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufel besondere Vorteile hinsichtlich der Kühlung und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch die Einbringung von Schlitzen in die die Kühlkanäle einer Turbinenschaufel begrenzenden Kanäle im Plattformbereich eine Reduzierung der Steifigkeit und eine Entkopplung des thermischen Gradienten erreicht wird. Damit wird die thermische Belastung reduziert, so dass die Zugbelastung in der Turbinenschaufel insgesamt geringer wird. Dies erhöht die Lebensdauer und führt zu geringerem Verschleiß und reduziertem Wartungsaufwand. Gleichzeitig erfordert diese Maßnahme vergleichsweise geringen technischen Aufwand und erlaubt eine kostengünstige Realisierung der genannten Vorteile.

Ausführungsbeispiele der Erfindung werden anhand einer Zeichnung näher erläutert.

Darin zeigen:
- FIG 1: einen teilweisen Längsschnitt durch eine Gasturbine,
- FIG 2: das Profil einer Laufschaufel,
- FIG 3: einen Längsschnitt durch die Laufschaufel,
- FIG 4: eine Rippe mit einem Schlitz mit Querschlitz, und
- FIG 5: eine Rippe mit mehreren parallelen Schlitzen.

Gleiche Teile sind in allen Figuren mit denselben Bezugszeichen versehen.

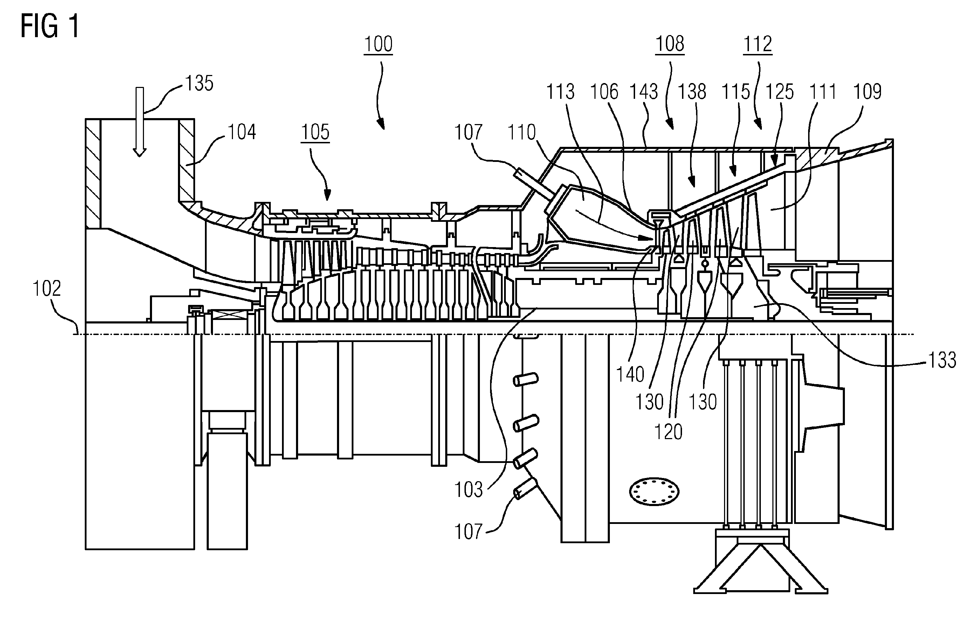

Die FIG 1 zeigt eine Turbine 100, hier eine Gasturbine, in einem Längsteilschnitt. Eine Turbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise Zr02, Y204-Zr02) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

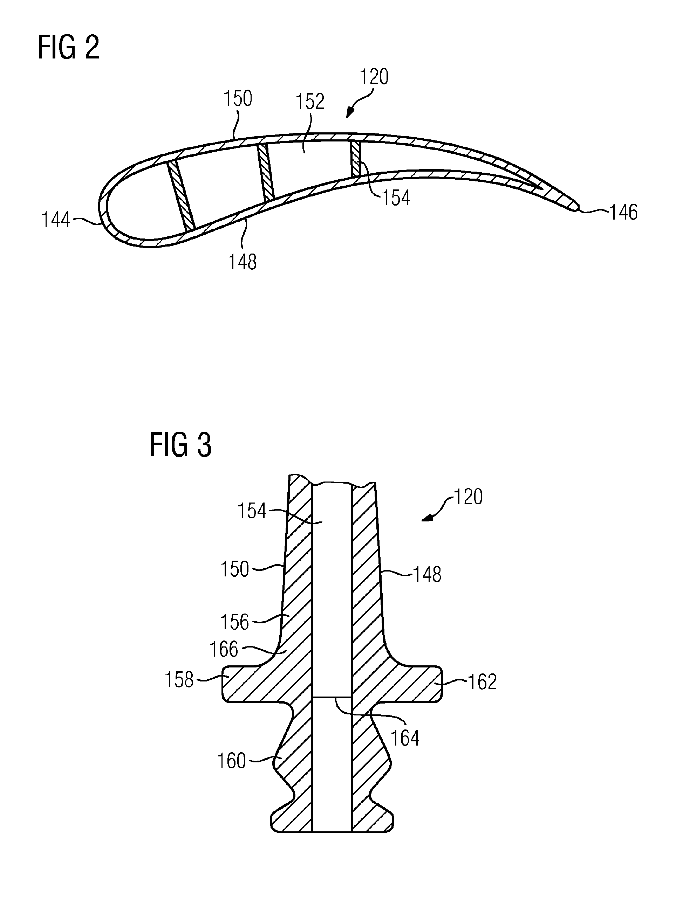

Jede Leitschaufel 130 weist einen auch als Plattform bezeichneten, dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel einen derartigen Laufschaufelfuß auf, wie in der folgenden FIG 3 noch dargestellt wird, endet jedoch in einer Laufschaufelspitze.

In FIG 2 ist beispielhaft das Profil einer Laufschaufel 120 gezeigt. Das Profil ähnelt dem einer Flugzeugtragfläche. Es weist eine abgerundete Profilnase 144 und eine Profilhinterkante 146 auf. Zwischen Profilnase 144 und Profilhinterkante 146 erstrecken sich die konkave Druckseitenwand 148 und die konvexe Saugseitenwand 150 der Laufschaufel 120. Zwischen Druckseitenwand 148 und Saugseitenwand 150 sind Kühlluftkanäle 152 eingebracht, die sich entlang der in die FIG 2 hineinführenden Längsrichtung der Laufschaufel 120 erstrecken und durch Rippen 154 voneinander abgegrenzt sind. Mit anderen Worten: Die Rippen 154 unterteilen den Hohlraum zwischen Druckseitenwand 148 und Saugseitenwand 150 in Kühlluftkanäle 152.

FIG 3 zeigt die Laufschaufel 120 im Längsschnitt aus Sicht der Profilnase 144. Gezeigt sind die Druckseitenwand 148 und die Saugseitenwand 150 im Schaufelblattbereich 156. An den Schaufelbereich 156 schließen sich der Plattformbereich 158 und der Befestigungsbereich 160 an. Im Plattformbereich ist die bereits angesprochene, quer ausgerichtete Plattform 162 angeordnet, die zur Abdichtung des Rotors 103 gegen das Heißgas dient. Unterhalb der Plattform 162 sind im Befestigungsbereich Profilierungen angebracht, mittels derer die Laufschaufel 120 am Rotor 103 in der Art einer Nut-Feder-Verbindung fixiert wird.

Zwischen Druckseitenwand 148 und die Saugseitenwand 150 ist eine Rippe 154 erkennbar. Diese erstreckt sich über den Schaufelblattbereich 156 und endet etwa bündig mit der Unterseite der Plattform 162. Ihre Endkante 164 liegt somit zwischen Plattformbereich 158 und Befestigungsbereich 160. Kühlluft tritt am unteren Ende der FIG 3 ein und wird so in den von der Rippe 154 begrenzten Kühlluftkanal 152 geführt.

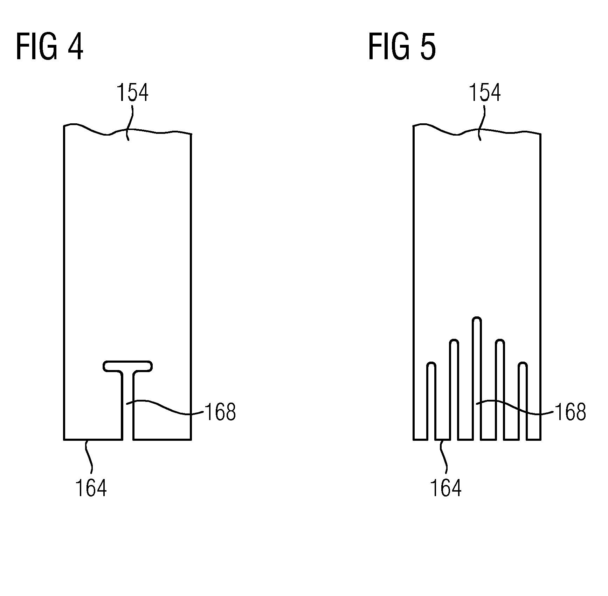

Die Außenseiten der Druckseitenwand 148 und der Saugseitenwand 150 gehen über eine Verrundung 166 in die Oberfläche der Plattform 162 über. Durch die dadurch höhere Steifheit und den Temperaturgradienten in diesem Bereich ergeben sich besonders hohe Belastungen des Materials. Dieses Problem wird durch eine Ausgestaltung der Rippe 154 gemäß der FIG 4 und 5 gelöst, indem nämlich Schlitze 168 in die Rippe 154 eingebracht werden.

FIG 4 zeigt eine erste Ausführungsform der Rippe 154 mit einem Schlitz 168, der sich mittig zwischen Druckseitenwand 148 und Saugseitenwand 150 ausgehend von der Endkante 164 in die Rippe 154 hinein erstreckt. In seiner Länge erstreckt er sich in etwa über den Plattformbereich 158. Er durchstößt die Rippe 154 in Richtung von der Profilnase 144 zur Profilhinterkante 146 vollständig. Am seinem rippeninneren Ende geht der Schlitz 168 in einen kurzen Querschlitz 170 über, der sich parallel zur Endkante 164 erstreckt.

FIG 5 zeigt eine alternative Ausführungsform mit fünf Schlitzen 168, die sich gleichmäßig verteilt auf der Endkante 164 parallel zueinander ausgehend von der Endkante 164 in die Rippe 154 hinein erstrecken. Die Schlitze 168 durchstoßen die Rippe 154 in Richtung von der Profilnase 144 zur Profilhinterkante 146 ebenfalls vollständig. Der mittlere Schlitz 168 erstreckt sich dabei am weitesten in die Rippe 154 hinein, während die Erstreckungstiefe der übrigen Schlitze 168 zur Druckseitenwand 148 bzw. Saugseitenwand 150 hin in etwa linear abnimmt.

Grundsätzlich sind weitere Anordnungen von Schlitzen 168 möglich, die abhängig von der konkreten Zugbelastung der Schaufel 120, 130 gewählt werden sollten. Die beschriebene Struktur, insbesondere der Rippe 154 im Plattformbereich 158 wurde am Beispiel einer Laufschaufel 120 erläutert. Ebensolche Strukturen mit Schlitzen 168 können auch entsprechend in Leitschaufeln 130 vorgesehen sein.

## Patentansprüche

1. Turbinenschaufel (120, 130) für eine Gasturbine (100) mit einem Befestigungsbereich (160) und einem sich daran anschließenden Plattformbereich (158), der eine Plattform (162) umfasst, an der ein im Querschnitt profiliertes Schaufelblatt mit einer Druckseitenwand (148) und einer Saugseitenwand (150) angeordnet ist,
wobei die Außenseiten der Druckseitenwand (148) und/oder der Saugseitenwand (160) jeweils über eine äußere Verrundung (166) in die Plattformoberfläche übergehen,
mit zumindest einem im Schaufelblatt angeordneten, sich bis in den Plattformbereich (158) erstreckenden Hohlraum, in dem zumindest eine die Druckseitenwand (148) mit der Saugseitenwand (150) verbindende Rippe (154) vorgesehen ist, welche sich entlang einer Längsrichtung des Schaufelblatts erstreckend den Hohlraum unterteilt,
wobei in die Rippe (154) im Plattformbereich (158) zumindest ein die Rippe (154) durchdringender, in der Längsrichtung angeordneter Schlitz (168) eingebracht ist.

2. Turbinenschaufel (120, 130) nach Anspruch 1,
bei der in die Rippe (154) im Plattformbereich (158) mehrere parallele, die Rippe (154) durchdringende, in der Längsrichtung angeordnete Schlitze (168) eingebracht sind.

3. Turbinenschaufel (120, 130) nach Anspruch 2,
bei der die Länge der Schlitze (168) ausgehend vom Mittelpunkt zwischen Druckseitenwand (148) und Saugseitenwand (150) abnimmt.

4. Turbinenschaufel (120, 130) nach einem der vorhergehenden Ansprüche,
bei der an einem längsseitigen Ende des jeweiligen Schlitzes (168) ein die Rippe (154) durchdringender Querschlitz (170) angeordnet ist.

5. Turbinenschaufel (120, 130) nach einem der vorhergehenden Ansprüche,
bei der die Rippe (154) eine dem Befestigungsbereich (160) zugewandte Endkante (164) aufweist,
wobei der jeweilige Schlitz (168) die Endkante (164) durchdringt.

6. Turbinenschaufel (120, 130) nach einem der vorhergehenden Ansprüche,
bei die Endkante (164) zwischen Plattformbereich (158) und Befestigungsbereich (160) angeordnet ist.

7. Stator (143) oder Rotor (103) für eine Turbine (100) mit einer Turbinenschaufel (120, 130) nach einem der vorhergehenden Ansprüche.

8. Turbine (100) mit einem Stator (143) und/oder Rotor (103) nach Anspruch 7.

9. Turbine (100) nach Anspruch 8,
die als Gasturbine (100) ausgelegt ist.

10. Kraftwerksanlage mit einer Turbine (100) nach Anspruch 8 oder 9.
